Europäisches Patentamt

European Patent Office

Office européen des brevets

(19)

(11) Numéro de publication: **0 161 118**
**B1**

(12) **FASCICULE DE BREVET EUROPEEN**

(45) Date de publication du fascicule du brevet:
**14.09.88**

(51) Int. Cl.⁴: **C 08 L 27/16**

(21) Numéro de dépôt: **85400303.5**

(22) Date de dépôt: **20.02.85**

(54) **Compositions de polyfluoride de vinylidène de flexibilité améliorée et leur utilisation, notamment dans la fabrication de tubes flexibles.**

(30) Priorité: **06.03.84 FR 8403574**

(43) Date de publication de la demande:
**13.11.85 Bulletin 85/46**

(45) Mention de la délivrance du brevet:
**14.09.88 Bulletin 88/37**

(84) Etats contractants désignés:
**BE CH DE GB IT LI NL SE**

(56) Documents cités:
**US - A - 2 581 453**

(73) Titulaire: **INSTITUT FRANCAIS DU PETROLE, 4, Avenue de Bois-Préau, F-92506 Rueil-Malmaison Cédex (FR)**

(72) Inventeur: **Bre, Anne, 10, avenue Jean Jacques Rousseau, F-60330 Le Plessis Belleville (FR)**
Inventeur: **Mollard, Marc, 24, rue des Erables, F-78360 Montesson (FR)**
Inventeur: **Osgan, Maseh, 75, rue de Saussure, F-75017 Paris (FR)**

## Description

L'invention concerne des compositions de polyfluorure de vinylidène présentant une flexibilité améliorée, la préparation de telles compositions ainsi que leurs applications.

On sait que le polyfluorure de vinylidène présente un certain nombre de propriétés avantageuses, notamment une température de fusion relativement basse (d'environ 170 à 180°C selon son degré de cristallinité) qui facilite sa mise en forme (par exemple par extrusion) et l'assemblage de pièces par soudage; il présente en outre une très bonne tenue chimique en présence de nombreux agents, ainsi qu'une excellente tenue thermique. Cependant, son défaut majeur, lié à sa nature cristalline, est sa rigidité élevée qui fait obstacle à son utilisation en structure flexible.

Dans l'art antérieur, on a cherché à remédier à cet inconvénient par diverses méthodes de plastification interne (c'est-à-dire par copolymérisation du fluorure de vinylidène avec d'autres monomères apportant la souplesse) ou de plastification externe (c'est-à-dire par incorporation au polymère de divers composés à action plastifiante).

Si la plastification interne du polyfluorure de vinylidène a été étudiée largement, il faut noter qu'elle entraîne un bouleversement profond de la structure de l'homopolymère, qui peut influer de façon importante sur ses propriétés (par exemple abaissement du point de fusion et de la stabilité thermique).

En ce qui concerne la plastification externe du polyfluorure de vinylidène, comme c'est aussi le cas pour le polychlorure de vinylidène, la difficulté rencontrée provient du fait que sa nature fortement cristalline rend incompatible la plupart des plastifiants connus pour les substances polymériques provenant de monomères vinyliques.

On trouve néanmoins dans l'art antérieur divers documents traitant de la plastification interne du polyfluorure de vinylidène ou de copolymères contenant du fluorure de vinylidène avec d'autres monomères halogéno-oléfiniques.

On peut citer le brevet US 2 820 772, qui décrit principalement la plastification de polymères de trifluorochloroéthylène et aussi celle de polymères de fluorure de vinylidène par des télomères de trifluorochloroéthylène.

Dans le brevet US 2 884 399, on plastifie notamment des copolymères non cristallins de trifluorochloroéthylène avec du fluorure de vinylidène (ces copolymères contenant au moins 20% en moles de trifluorochloroéthylène), au moyen d'un tétraester formé entre un composé dihydroxylé, un acide dicarboxylique et un composé monohydroxylé.

Par ailleurs, le brevet US 3 541 039 décrit la plastification de polyfluorure de vinylidène par des polyesters formés entre un acide dicarboxylique aliphatique linéaire de 4 à 8 atomes et un diol aliphatique de 4 à 7 atomes de carbone. Les produits spécifiques sont le poly (sébaçate de diméthyl-2,2 propylène) et le poly (adipate de méthyl-1 propylène).

La demande de brevet français FR. A 2 243 970 décrit l'utilisation de polyesters acétylés (par exemple un acétate de polyester acide adipiquepropylèneglycol) pour plastifier un polyfluorure de vinylidène. Des polyesters acide adipique-propylèneglycol sont également utilisés pour plastifier le polyfluorure de vinylidène dans la demande de brevet japonais 8 084 413. De même, dans la demande de brevet japonais 8 120 610, on utilise un polyester acétylé, par exemple un acétate de poly (acide adipique-propylèneglycol) pour plastifier un mélange de polyfluorure de vinylidène et d'un polymère d'acrylate de méthyle (polyacrylate de méthyle ou copolymère isobutylèneacrylate de méthyle).

Enfin, on a également mentionné dans l'art antérieur, l'amélioration de la mise en œuvre de résines fluorées (polyfluorure de vinylidène, polychlorotrifluoroéthylène) par des plastifiants de structure fluoroalkylphosphate (demande de brevet japonais 7 773 956) ainsi que l'utilisation d'éthers cyanoéthylés pour diminuer la valeur du module élastique du polyfluorure de vinylidène (demande de brevet japonais 82 187 344). On a maintenant découvert qu'il était possible d'utiliser comme plastifiants du polyfluorure de vinylidène certains composés non polymériques apportant par rapport aux composés préconisés dans l'art antérieur un certain nombre d'améliorations inattendues. Ils présentent une grande facilité d'incorporation dans le polyfluorure de vinylidène, une bonne tenue à la chaleur et confèrent au polymère une souplesse accrue (module d'élasticité abaissé, allongement au seuil élastique et allongement à la rupture augmentés). Ils présentent en outre une bonne compatibilité avec le polyfluorure de vinylidène, qui se traduit notamment par une migration réduite.

Les polyfluorures de vinylidène considérés dans l'invention sont des polymères de cristallinité élevée pouvant contenir au plus 5% en moles d'un monomère différent, du type halogénoéthylène (par exemple trifluorochloroéthylène, tétrafluoroéthylène, dichlorodifluoroéthylène ou trifluoroéthylène).

Ils présentent en général une masse molaire moyenne en poids d'au moins 100 000, qui peut être aussi élevée que, par exemple, 1 500 000. Ils peuvent être préparés par polymérisation radicalaire, selon des méthodes classiques.

D'une manière générale, les compositions de polyfluorure de vinylidène de l'invention peuvent être définies comme comprenant une proportion majeure de polyfluorure de vinylidène de masse moléculaire moyenne de 100 000 à 1 500 000 et une proportion de 1 à 25% en poids, suffisante pour en améliorer la flexibilité, d'au moins un ester ayant une masse molaire d'environ 300 à environ 1000, formé entre d'une part au moins un diol aliphatique choisi parmi le diméthyl-2,2 propanediol-1,3, les polyéthylèneglycols renfermant de 2 à environ 20 motifs oxyde d'éthylène par molécule, le propylèneglycol, les polypropylèneglycols renfermant de 2 à environ 15 motifs oxyde de propylène par molécule, le tétraméthylèneglycol et

2

les polytétraméthylèneglycols renfermant de 2 à environ 12 motifs tétraméthylènoxy par molécule ou un triol aliphatique et d'autre part au moins un acide monocarboxylique à chaîne aliphatique qui renferme de 2 à 10 atomes de carbone ou un acide monocarboxylique à radical aromatique.

Les esters considérés plus particulièrement peuvent consister en des esters formés entre des diols aliphatiques choisis parmi le diméthyl-2,2 propanediol-1,3 (néopentylglycol), les polyéthylèneglycols renfermant un nombre de motifs oxyde d'éthylène par molécule d'au moins 2 et pouvant aller par exemple jusqu'à environ 20, (en particulier le diéthylèneglycol et le triéthylèneglycol) le propylèneglycol, les polypropylèneglycols renfermant un nombre de motifs oxyde de propylène par molécule d'au moins 2 et pouvant aller par exemple jusqu'à 15 (en particulier le dipropylèneglycol), le tétraméthylèneglycol et les polytétraméthylèneglycols renfermant un nombre de motifs oxyde de tétraméthylène par molécule d'au moins 2 et pouvant aller par exemple jusqu'à 12, ou les triols aliphatiques tels que le glycérol; et des acides monocarboxyliques choisis parmi les acides moncarboxyliques à chaîne aliphatique qui renferment de 2 à 10 atomes de carbone et les acides monocarboxyliques à radical aromatique tels que l'acide benzoïque.

Parmi les diols de type polyalkylèneglycol, il est possible dans le cadre de l'invention, d'utiliser pour former l'ester, un copolymère, statistique ou séquencé, de deux alkylèneglycols différents, en proportions variées par exemple un poly (éthylène-propylène) glycol.

Comme esters plastifiants utilisés dans l'invention, on peut citer comme particulièrement avantageux:
le dibenzoate de diméthyl-2,2 propanediol-1,3;
le dibenzoate de diéthylèneglycol;
le diheptanoate de triéthylèneglycol;
le dibenzoate de propylèneglycol;
le dibenzoate de dipropylèneglycol; et
le tribenzoate de glycérol.

Ces esters, utilisés comme plastifiants dans les compositions de polyfluorure de vinylidène de l'invention, sont incorporés à celles-ci en des proportions allant de préférence de 5 à 15% en poids.

De façon générale, l'incorporation des produits plastifiants dans le polyfluorure de vinylidène peut être réalisée par diverses méthodes connues, utilisant les différents instruments de malaxage utilisés couramment dans l'industrie de transformation des caoutchoucs et des plastiques, qui sont par exemple des extrudeuses équipées d'une vis, de deux vis, ou de dispositifs mécaniques spéciaux, ou encore des malaxeurs à cylindres, à paples, etc.

La température mise en jeu est en général comprise entre 180 et 300°C (par exemple entre 180 et 240°C). En effet, l'incorporation homogène du plastifiant dans le polyfluorure de vinylidène nécessite de faire fondre totalement le polymère, c'est-à-dire de le porter à une température supérieure à 170°C. Par ailleurs, au cours du mélangeage ou des différents processus de mise en œuvre, la température du mélange ne doit jamais excéder 350°C, de façon à éviter tout phénomène de décomposition thermique du polymère.

Les compositions de polyfluorure de vinylidène de flexibilité accrue, selon l'invention, sont utilisables dans diverses applications qui requièrent des matériaux ayant à la fois une stabilité à la chaleur élevée et une bonne souplesse. Elles conviennent particulièrement bien à la fabrication de pièces moulées par injection ou d'objets extrudés tels que des films, des feuilles, des gaines ou des tubes, notamment des tubes destinés au transport de divers fluides tels que par exemple de l'eau chaude, des produits chimiques ou encore des hydrocarbures.

Les exemples suivants illustrent l'invention; ils ne doivent en aucune manière être considérés comme limitatifs. Les compositions H à Q ont été préparées à des fins de comparaison.

Dans les exemples 1 à 4, on a utilisé un polyfluorure de vinylidène du commerce de masse molaire moyenne en poids d'environ 170 000 dont les propriétés mécaniques (mesurées dans des conditions identiques à celles des préparations décrites plus loin et sur le même type d'éprouvettes obtenues à partir de plaques moulées selon le processus défini ci-dessous) sont les suivantes:

| | |
|---|---|
| module élastique | 1700 MPa |
| contrainte au seuil | 54,5 MPa |
| allongement au seuil | 8,3% |
| contrainte à la rupture | 40 MPa |
| allongement à la rupture | ~30% |

Exemple 1

On a cherché à incorporer, à raison de 10% en poids, à du polyfluorure de vinylidène chacun des esters suivants:

Composition A: le dibenzoate de diméthyl-2,2 propanediol-1,3

Composition B: le dibenzoate de diéthylèneglycol

Composition C: le diheptanoate de triéthylèneglycol

Composition D: le dibenzoate de propylèneglycol

Composition E: le dibenzoate de dipropylèneglycol

Composition F: un mélange 50/50 en poids de dibenzoate de diéthylèneglycol et de dibenzoate de dipropylèneglycol

Composition G: le tribenzoate de glycérol.

L'incorporation du plastifiant à l'homopolymère est effectuée par mélangeage sur cylindres, à 200° C. Les granulés de polyfluorure de vinylidène sont préalablement fondus sur les cylindres, puis on incorpore le plus rapidement possible pour éviter les pertes par volatilité, la quantité convenable du plastifiant choisi.

D'autre part et à titre de comparaison, on a cherché à incorporer au polyfluorure de vinylidène, en la même proportion de 10% en poids, divers autres composés, parmi lesquels certains sont déjà connus comme plastifiants:

Composition H: le tétrabenzoate de pentaérythritol

Composition I: le N-éthyl (o,p)-toluène sulfonamide

Composition J: le phosphate d'éthyl-2 hexyle et de diphényle

Composition K: le trimellitate d'éthyl-2 hexyle

Composition L: l'abiétate de méthyle

Composition M: l'azélate de di (n-hexyle)

Composition N: le phtalate de butyle et de benzyle

Composition O: un phtalate dit «linéaire» vendu par MONSANTO sous la dénomination Santicizer ®711.

Composition P: le sébaçate de di(éthyl-2 hexyle)

Composition Q: le sebaçate de dibutyle.

Pour chacun des esters ou mélange d'esters, mis en jeu dans les compositions A à G, l'incorporation s'est effectuée sans difficultés, de même que pour les compositions I, J, L, M, N, Q; tandis que pour les compositions H, K, O, P, l'incorporation s'avère difficile (H, P), voire impossible (K, O) à réaliser car le mélange ne «prend pas»: le plastifiant, trop gras, rend le mélange glissant sur les cylindres et provoque la formation de boules ou de blocs qui ne s'homogénéisent pas, ou mal, au reste du mélange.

A noter en outre que, pour la composition Q, on observe une importante perte de poids du plastifiant (sébaçate de dibutyle), au cours de l'incorporation.

Lorsqu'on a pu réaliser l'incorporation du plastifiant dans le polyfluorure de vinylidène, dans l'exemple précédent, les mélanges, obtenus sous la forme de bandes, ont été moulés par compression entre deux plateaux, en plaques de 1 ou 2 mm d'épaisseur, dans lesquelles ont été découpées les éprouvettes testées comme décrit dans les exemples 2 à 4 qui suivent.

Les conditions du moulage sont les suivantes:
– 190°C, sous 200 bars pendant 5 minutes
– refroidissement lent pendant 10 minutes par circulation d'eau dans les plateaux.

Exemple 2

On a testé la tenue à la chaleur des matériaux (compositions K et O exclues) préparés comme décrit précédemment, sur des rectangles de 2 mm d'épaisseur. On a observé le comportement des matériaux dans des conditions sévères (275°C pendant 90 min). Les résultats, indiqués au tableau 1, rendent compte de la possibilité ou de l'impossibilité de réaliser sans risques de décompositions les opérations d'extrusion ou autres processus de mise en œuvre.

Les matériaux A à G selon l'invention ont un bon comportement qualitatif, ainsi que les matériaux de comparaison L, M, N, Q. Ils ne présentent pas (ou très peu) de déformations, pas de phénomènes de cloquage, ni de noircissement, contrairement aux matériaux H, I, J, P. Notamment le phosphate (J) ainsi que le sulfonamide (I) ont un comportement particulièrement insatisfaisant à cet égard (noircissement important dans les deux cas, accompagné d'un cloquage et de déformations sévères pour le phosphate). Les autres compositions (H, P) ne subissent pas de perturbation de couleur, mais présentent des déformations importantes.

Tableau 1

| Matériau | Couleur | Aspect |
|---|---|---|
| A | blanc | bon |
| B | jaunâtre | bon |
| C | jaunâtre | bon |
| D | jaunâtre | bon |
| E | jaunâtre | bon |
| F | jaunâtre | bon |
| G | grisâtre | très légère déformation |
| H | blanc opaque | déformations |
| I | noir | bon |
| J | noir | cloquage, déformations |
| L | marron clair | légère déformation |
| M | jaunâtre | légère déformation |
| N | jaunâtre | bon |
| P | jaunâtre | déformations |
| Q | jaunâtre | très légère déformation |

Exemple 3

On a mesuré les caractéristiques mécaniques en traction des matériaux A à G, H, L, M, N, P et Q, décrits précédemment, par la méthode normalisée ISO R 527.

Les éprouvettes sont de type $H_2$ (épaisseur 2 mm), la température de l'essai de 20°C, et la vitesse de traction de 5mm/min. Les résultats de ces déterminations sont indiqués dans le tableau 2, dans lequel on a rappelé les valeurs obtenues par les mêmes méthodes de mesure sur le polyfluorure de vinylidène seul.

Tableau 2

| Matériau | Module élastique (MPa) | Contrainte seuil (MPa) | Allongement seuil (%) | Contrainte rupture (MPa) | Allongement rupture (%) |
|---|---|---|---|---|---|
| PVDF seul | 1700 | 54,5 | 8,3 | 40 | ~30 |
| A | 863 | 37 | 18,5 | 38,5 | 357 |
| B | 1200 | 36 | 23 | 49 | 440 |
| C | 915 | 31,5 | 29 | 35 | 370 |

Tableau 2 (suite)

| Matériau | Module élastique (MPa) | Contrainte seuil (MPa) | Allongement seuil (%) | Contrainte rupture (MPa) | Allongement rupture (%) |
|---|---|---|---|---|---|
| PVDF seul | 1700 | 54,5 | 8,3 | 40 | $\sim$ 30 |
| D | 1200 | 39,5 | 19,5 | 36 | $\sim$ 280 |
| E | 1150 | 38 | 16,5 | 40,5 | 385 |
| F | 1116 | 38,5 | 16,5 | 38,5 | 327 |
| G | 997 | 38 | 16 | 40 | 377 |
| H* | 1444 | 41 | 11,5 | 34 | 320 |
| L | 1700 | 42 | 9,5 | 36 | $\sim$ 250 |
| M | 1400 | 28,5 | 5,5 | 30,5 | $\sim$ 230 |
| N | $\sim$ 1500 | 44,5 | 15,1 | 31 | 330 |
| P* | 1500 | 31,5 | 5,5 | 32,5 | $\sim$ 50 |
| Q | 1545 | 38 | 15,5 | 30,5 | 260 |

\* Incorporation difficile.

D'après ces résultats, il apparaît que les esters d'acides monocarboxyliques et de diols ou de triols (compositions A à G) présentent des effets d'amélioration des propriétés mécaniques particulièrement marqués. Pour sa part, l'ester de tétrol (tétrabenzoate de pentaérythritol) ne donne que des résultats relativement médiocres (composition H).

Les compositions L et M ne présentent pas de valeurs satisfaisantes pour le module élastique et l'allongement au seuil. En ce qui concerne les sébaçates (compositions P et Q), le sébaçate de di(éthyl-2 hexyle), difficile à incorporer, donne de très mauvais résultats, en particulier sur l'allongement au seuil et à la rupture; quant au sébaçate de dibutyle, il conduit à un module élastique qui demeure trop élevé. Le phtalate de butyle et de benzyle (composition N) ne permet pas de diminuer suffisamment le module élastique ainsi que la contrainte au seuil.

Exemple 4

On a soumis certains des matériaux précédents (découpés sous forme de disques d'1 mm d'épaisseur) à un essai de compatibilité, dans lequel on évalue la résistance à la migration du plastifiant par absorption de ce dernier par de la silice finement divisée. Les mesures ont été effectuées après 7 jours d'essai, et l'on détermine la perte relative de plastifiant en % poids (ramenée au poids total de l'échantillon polyfluorure de vinylidène + plastifiant). Les résultats figurent dans le tableau 3

Tableau 3

| Matériau | Migration dans la Silice % pds |
|---|---|
| A | 0,042 |
| B | 0,082 |
| C | 0,13 |
| D | 0,075 |
| E | 0,095 |

Tableau 3 (suite)

| | |
|---|---|
| F | 0,060 |
| G | 0,090 |
| H | 0,047 |
| N | 0,082 |
| Q | 0,25 |

Ces résultats mettent en évidence le bon comportement des matériaux A à G (particulièrement marqué pour le matériau A ainsi que celui des matériaux H et N. En revanche, la composition Q présente une migration très importante. Dans les exemples 5 à 7, on a utilisé un polyfluorure de vinylidène présentant une masse molaire moyenne en poids plus élevée et une cristallinité plus faible que celui utilisé dans les exemples 1 à 4.

Les propriétés mécaniques, mesurées dans la plupart des cas en traction dans les mêmes conditions que précédemment, sont les suivantes:

| | |
|---|---|
| Module élastique | : 1930 MPa |
| Contrainte au seuil | : 51 MPa |
| Allongement au seuil | : 9% |
| Contrainte à la rupture | : 43,5 MPa |
| Allongement à la rupture | : 370% |

(\* le module élastique a été mesuré en flexion)

Exemple 5

On a incorporé au polyfluorure de vinylidène défini ci-dessus, chacun des esters suivants à raison d'environ 10% en poids.

Composition R: diheptanoate de triéthylèneglycol
Composition S: dibenzoate de diéthylèneglycol
Composition T: dibenzoate de diméthyl-2,2 propanediol-1,3.

Pour chacun des esters mis en jeu dans les compositions R à T, l'incorporation, effectuée comme décrit dans l'exemple 1, s'est déroulée sans difficultés.

Exemple 6

On a déterminé les caractéristiques mécaniques de chacun des matériaux R à T préparés comme indiqué dans l'exemple 5.

Les mesures ont été effectuées comme décrit dans l'exemple 3 et les résultats sont donnés au tableau 4 ci-après. Sauf indication contraire, les mesures ont été effectuées en traction.

Tableau 4

| Matériau | Module élastique (MPa) | Contrainte au seuil (MPa) | Allongement au seuil (%) | Contrainte à rupture (MPa) | Allongement à rupture (%) |
|---|---|---|---|---|---|
| PVDF seul | 1930* | 51 | 9 | 43,5 | 370 |
| R | 1500 1065* | 37 | 20,5 | 44 | 415 |
| S | 1300 955* | 36,5 | 19,5 | ~ 56 | 455 |
| T | 1300 985* | 39,5 | 18,5 | 59 | 460 |

* module élastique en flexion.

D'après ces résultats, on remarque que les propriétés mécaniques des matériaux R, S et T sont tout à fait satisfaisantes.

Exemple 7

On a soumis des échantillons des matériaux R, S et T selon l'invention (sous forme de disques d'1 mm d'épaisseur) au test de migration dans la silice décrit dans l'exemple 4.

A des fins de comparaison, on a soumis au même test un échantillon d'un matériau noté U constitué du même polyfluorure de vinylidène dans lequel on a incorporé 10% en poids de sébaçate de dibutyle.

Les résultats (mesurés au bout de 7 jours et de 28 jours) figurent dans le tableau 5 ci-après.

Tableau 5

| Matériau | Migration dans la silice (% poids) après 7 jours | après 28 jours |
|---|---|---|
| R | 0,11 | 0,29 |
| S | 0,06 | 0,16 |
| T | 0,08 | 0,12 |
| U | 0,33 | 0,73 |

Ces résultats montrent un comportement nettement amélioré pour les matériaux R, S et T par rapport au matériau U.

**Revendications**

1. Composition de polyfluorure de vinylidène, caractérisé en ce qu'elle comprend une proportion majeure de polyfluorure de vinylidène de masse molaire moyenne de 100 000 à 1 500 000, auquel est incorporée une proportion de 1 à 25% en poids, suffisante pour en améliorer la flexibilité, d'au moins un ester ayant une masse molaire de 300 à 1000, formé entre d'une part au moins un diol aliphatique choisi parmi le diméthyl-2,2 propanediol-1,3, les polyéthylèneglycols renfermant de 2 à 20 motifs oxyde d'éthylène par molécule, le propylèneglycol, les polypropylèneglycols renfermant de 2 à 15 motifs oxyde de propylène par molécule, le tétraméthylèneglycol et les polytétraméthylèneglycols renfermant de 2 à 12 motifs tétraméthylènoxy par molécule ou un triol aliphatique et d'autre part au moins un acide monocarboxylique à chaîne aliphatique qui renferme de 2 à 10 atomes de carbone ou un acide monocarboxylique à radical aromatique.

2. Composition selon la revendication 1, caractérisée en ce que ledit ester est choisi parmi le dibenzoate de diméthyl-2,2 propanediol-1,3, le dibenzoate de diéthylèneglycol, le diheptanoate de triéthylèneglycol, le dibenzoate de propylèneglycol, le dibenzoate de dipropylèneglycol et le tribenzoate de glycérol.

3. Composition selon la revendication 1 ou 2, caractérisée en ce que ladite proportion est de 5 à 15% en poids.

4. Composition selon l'une des revendications 1 à 3, caractérisée en ce que ledit polyfluorure de vinylidène comprend au plus 5% d'un monomère consistant en un halogénoéthylène copolymérisé.

5. Procédé de préparation d'une composition selon l'une des revendications 1 à 4, caractérisé en ce que l'on incorpore par malaxage la quantité convenable dudit ester au polyfluorure de vinylidène fondu à une température de 180 à 300°C.

6. Procédé de préparation d'une composition selon l'une des revendications 1 à 4, caractérisé en ce que l'on incorpore par malaxage la quantité convenable dudit ester au polyfluorure de vinylidène fondu à une température de 180 à 240° C.

7. Utilisation d'une composition selon l'une des revendications 1 à 4 comme matériau pour la fabrication par extrusion de tubes.

## Zusammenfassung

1. Polyvinylidenfluorid-Zusammensetzung, dadurch gekennzeichnet, dass sie einen Hauptanteil an Polyvinylidenfluorid der mittleren molaren Masse 100 000 bis 1 500 000 aufweist, welchem ein Anteil von 1 bis 25 Gew.%, ausreichend um die Biegsamkeit zu verbessern, von zumindest einem Ester zugesetzt ist, der eine molare Masse von 300 bis 1000 aufweist und einerseits aus zumindest einem aliphatischen Diol aus der Gruppe 2,2-Dimethylpropandiol-1,3, Polyethylenglykolen mit 2 bis 20 Ethylenoxideinheiten pro Molekül, Propylenglykol, Polypropylenglykolen mit 2 bis 15 Propylenoxideinheiten pro Molekül, Tetramethylenglykol und Polytetramethylenglykolen mit 2 bis 12 Tetramethylenoxyeinheiten pro Molekül oder einem aliphatischen Triol und andererseits aus zumindest einer Monocarbonsäure mit aliphatischer Kette, die 2 bis 10 Kohlenstoffatome aufweist, oder einer Monocarbonsäure mit aromatischem Rest gebildet ist.

2. Zusammensetzung nach Anspruch 1, dadurch gekennzeichnet, dass der Ester aus der Gruppe 2,2-Dimethylpropandiol-1,3-dibenzoat, Diethylenglykoldibenzoat, Triethylenglykoldiheptanoat, Propylenglykoldibenzoat, Dipropylenglykoldibenzoat und Glycerintribenzoat gewählt ist.

3. Zusammensetzung nach Anspruch 1 oder 2, dadurch gekennzeichnet, dass der erwähnte Anteil 5 bis 15 Gew.% beträgt.

4. Zusammensetzung nach einem der Ansprüche 1 bis 3, dadurch gekennzeichnet, dass das erwähnte Polyvinylidenfluorid höchstens 5% eines Monomeren enthält, das aus einem copolymerisierten Ethylenhalogenid besteht.

5. Verfahren zur Herstellung einer Zusammensetzung nach einem der Ansprüche 1 bis 4, dadurch gekennzeichnet, dass man durch Mischen eine geeignete Menge des Esters in geschmolzenes Polyvinylidenfluorid bei einer Temperatur von 180 bis 300°C einbringt.

6. Verfahren zur Herstellung einer Zusammensetzung nach einem der Ansprüche 1 bis 4, dadurch gekennzeichnet, dass man durch Mischen die geeignete Menge des Esters in geschmolzenes Polyvinylidenfluorid bei einer Temperatur von 180 bis 240° C einbringt.

Verwendung einer Zusammensetzung nach einem der Ansprüche 1 bis 4 als Material zur Herstellung von Rohren durch Extrusion.

## Claims

1. A composition of polyvinylidene Fluoride, characterized in that it comprises a major proportion of polyvinylidene fluoride having an average molecular weight of 100,000 to 1,500,000, with which is incorporated a proportion of 1 to 25% by weight, sufficient to improve its flexibility, of at least one ester having a molecular weight of 300 to 1000, formed between, on the one hand, at least one aliphatic diol selected from 2,2-dimethyl-1,3-propanediol, polyethyleneglycols containing 2 to 20 ethylene oxide recurrent units per molecule, propylene glycol, polypropyleneglycols containing from 2 to 15 propylene oxide recurrent units per molecule, tetramethylene glycol and polytetramethyleneglycols containing from 2 to 12 tetramethylene oxide recurrent units per molecule or an aliphatic triol and, on the other hand, at least one monocarboxylic acid having an aliphatic chain containing 2 to 10 carbon atoms or a monocarboxylic acid having an aromatic radical.

2. A composition according to claim 1, characterized in that said ester is selected from 2,2-dimethyl-1,3-propanediol dibenzoate, diethyleneglycol dibenzoate, triethyleneglycol diheptanoate, propyleneglycol dibenzoate, dipropyleneglycol dibenzoate and glycerol tribenzoate.

3. A composition according to claim 1 or 2, characterized in that said proportion is from 5 to 15% by weight.

4. A composition according to one of claims 1 to 3, characterized in that said polyvinylidene fluoride comprises at most 5% of a monomer consisting in a copolymerized halogenoethylene.

5. A process for preparing a composition according to one of claims 1 to 4, characterized in that the suitable amount of said ester is incorporated by malaxating with the molten polyvinylidene fluoride at a temperature of 180 to 300°C.

6. A process for preparing a composition according to one of claims 1 to 4, characterized in that the suitable amount of said ester is incorporated by malaxating with the molten polyvinylidene fluoride at a temperature of 180 to 240°C.

7. The use of a composition according to one of claims 1 to 4 as a material for manufacturing tubes by extrusion.